Europäisches Patentamt

European Patent Office

Office européen des brevets

(19)

(11) Veröffentlichungsnummer **0 013 866**
**B1**

(12)

# EUROPÄISCHE PATENTSCHRIFT

(45) Veröffentlichungstag der Patentschrift:
19.09.84

(21) Anmeldenummer: 79810179.6

(22) Anmeldetag: 13.12.79

(51) Int. Cl.³: **H 02 M 5/458**, H 05 B 41/24,
H 02 P 13/20

(54) **Stromversorgung zur Speisung von ohmisch-induktiven Lasten.**

(30) Priorität: 22.12.78 CH 13091/78

(43) Veröffentlichungstag der Anmeldung:
06.08.80 Patentblatt 80/16

(45) Bekanntmachung des Hinweises auf die Patenterteilung:
19.09.84 Patentblatt 84/38

(84) Benannte Vertragsstaaten:
**DE GB IT**

(56) Entgegenhaltungen:
**DE - B - 1 538 042**
**FR - A - 2 143 836**
**US - A - 4 104 715**

(73) Patentinhaber: **CONTRINEX S.A., CH-1752 Matran (CH)**

(72) Erfinder: **Heimlicher, Peter, Klein-Schönberg 112,
CH-1700 Fribourg (CH)**

(74) Vertreter: **Steiner, Martin, c/o AMMANN
PATENTANWAELTE AG BERN Schwarztorstrasse 31,
CH-3001 Bern (CH)**

BUNDESDRUCKEREI BERLIN

## Beschreibung

Die vorliegende Erfindung betrifft einen Wechselstrom-Wechselstromumformer mit Gleichstromzwischenkreis zur Speisung einer ohmisch-induktiven oder induktiven Last, mit einem Gleichrichter, einem Gleichstrom-Stellglied, einem Filterkondensator, welcher die Last über einen Wechselrichter speist, und mit einem Oszillator aufweisenden Hilfskreisen zur Steuerung der Schaltmittel des Wechselrichters, um die Last mit Hilfe der vom Wechselrichter gelieferten Spannung zu speisen.

Eine solche Vorrichtung kann beispielsweise, aber nicht ausschließlich, zum Betrieb von Gasentladungslampen verwendet werden. Die Last wird durch einen Wechselrichter mit der Ausgangsspannung des Gleichstrom-Stellgliedes gespeist. In der konventionellen Betriebsart dieser Lampen, nämlich in Serie mit einer Vorschaltdrossel am Netz, folgt der Lichtstrom der Lampe mehr oder weniger der Kurvenform der Netzspannung. Dadurch können unerwünschte Nebenerscheinungen wie Stroboskopeffekte, Unwohlsein infolge des Flimmerns etc. auftreten.

Wenn die Last einem Gleichstromzwischenkreis nach Wechselrichtung durch eine aus vier Schaltern bestehende Brücke gespiesen wird, so ist für die kurze Zeit des Schaltvorganges ein Kommutationskondensator nötig, der während dieser Zeit den Laststrom führt. Dieser Kondensator schützt die Schalter, die zum Beispiel Transistoren sein können, und reduziert die Umschaltverluste. Die beste Wirkung wird mit einem relativ großen Kommutationskondensator erreicht. Erfolgt allerdings die Kommutierung nicht durch die normalerweise eine induktive Komponente aufweisende Last, zum Beispiel im Leerlauf, so entstehen durch das dauernde Umladen des Kondensators über die Transistoren bei der Frequenz von normalerweise einigen zehn Kilohertz hohe Verluste, und zwar proportional zum Wert des Kondensators.

Im weiteren zeigt es sich, daß die Kurvenform des Stromes, den eine Schaltung wie oben beschrieben aus dem Netz entnimmt, stark verzerrt ist. Sie besteht aus kurzen, hohen Impulsen mit stromlosen, relativ langen Pausen dazwischen. Die Elektrizitätslieferanten sind im allgemeinen nicht bereit, größere Anschlußleistungen mit einer so ungünstigen Kurvenform des Stromes zu bewilligen.

Aus der FR-PS 2 143 836 ist eine Vorrichtung bekannt, die dazu dient, einen kleinen Welligkeit aufweisenden Gleichstrom von einem Hochspannungs-Wechselstrom zu erzeugen, welcher einen Umformer für eine Wechselstrom-Leistungsanlage speist. Die Vorrichtung weist einen Brückengleichrichter, ein Gleichstrom-Stellglied, Filtermittel und einen Wechselrichter auf, durch welchen die Leistungsanlage gespeist wird. Jedoch wird die Leistungsanlage durch einen durch den Wechselrichter erzeugten Dreiphasen-Wechselstrom gespeist, so daß die Last-

Bedingungen nicht denjenigen nach vorliegender Erfindung entsprechen, und deshalb sind keine Maßnahmen vorgesehen, um den dem Netz entnommenen Strom annähernd sinusförmig zu halten.

Das Ziel der vorliegenden Erfindung ist es, eine Stromversorgung zum Betrieb ohmischindukter Lasten ohne die oben erwähnten Nachteile zu realisieren. Diese Stromversorgung soll einen relativ großen Kommutationskondensator ohne den Nachteil hoher Leerlaufverluste aufweisen und einen mindestens annähernd sinusförmigen Strom aus dem Netz ziehen.

Zur Erreichung dieses Zieles ist die erfindungsgemäße Stromversorgung gemäß den in den Patentansprüchen genannten Merkmalen hergestellt.

Die Erfindung wird nachstehend anhand von Beispielen beschrieben, mit Hilfe einer Zeichnung, in der

Fig. 1 eine erste nicht vollständige Ausführungsform der erfindungsgemäßen Stromversorgung zeigt,

Fig. 2 das Schema einer Schaltung zur Erzielung eines sinusförmigen Netzstromes mit konventioneller Kommutationsbeschaltung zeigt,

Fig. 3 den zeitlichen Verlauf der Spannung am Emitter des Transistors S7 von Fig. 2 und des Kollektorstromes von S7 zeigt,

Fig. 4 eine zweite Ausführungsform der erfindungsgemäßen Stromversorgung zeigt,

Fig. 5 den zeitlichen Verlauf der Spannung $U_{C5}$ am Kondensator C5, des Stromes $I_{T5}$ in der Speicherdrossel T5 und die Steuerimpulse $I_B$ an der Basis des Transistors S7 im Schema Fig. 4 zeigt,

Fig. 6 das Blockschema des Steuerkreises des Transistors S7 in Fig. 4 zeigt.

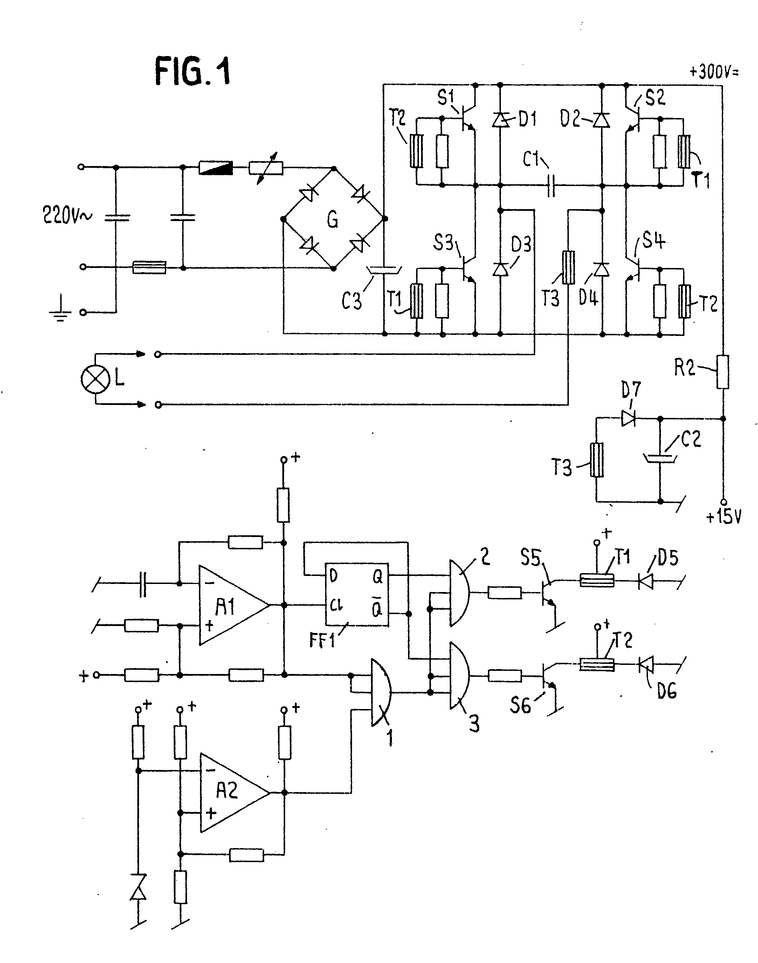

Fig. 1 zeigt, daß die Netzspannung in einem Gleichrichter G gleichgerichtet und mit dem Glättungskondensator C3 geglättet wird, so daß eine Gleichspannung von etwa +300 V mit einer geringen Restwelligkeit entsteht. Diese Spannung dient zur Speisung der Last L, die in Serie mit der Primärwicklung des Transformators T3, der als Vorschaltdrossel wirkt, in der Diagonale der aus S1—S4 gebildeten Brücke liegt, wobei die Brückentransistoren über die Sekundärwicklungen der Transformatoren T1 und T2 angesteuert werden. Die Transistoren S1—S4 sind im weiteren mit den als Freilaufdioden wirkenden, zwischen Emitter und Kollektor liegenden Dioden D1—D4 beschaltet. Ein Kommutationskondensator C1 liegt ebenfalls in der Diagonale der aus S1—S4 bestehenden Brücke. Die Sekundärwicklung des Transformators T3 erzeugt nach Gleichrichtung mit der Diode D7 und Glättung durch den Kondensator C2 die Speisespannung von beispielsweise 15 V für die Hilfsschaltung. Ein Widerstand R2 verbindet die positiven Pole der Spannungen von 300 V und 15 V. Die Hilfsschaltung zur Ansteuerung der Brücke besteht aus einem Oszillator A1 mit einer Frequenz von beispielsweise 80 kHz, der auf den Takteingang des D-Flip-Flops FF1 arbeitet, dessen Ausgänge Q und $\overline{Q}$ die UND-Tore 2 und 3 der noch aus dem UND-Tor 1 bestehenden Logik steuern. Die Eingänge des Tores 1 sind mit dem Oszillator A1 und mit dem Schwellwertdetektor oder Schmidttrigger A2 verbunden. Der Ausgang des Schwellwertdetektors wird positiv, wenn die Versorgungsspannung 15 V erreicht ist und kippt zurück, wenn 10 V unterschritten werden. Ist der Ausgang von A2 positiv, so ist das Tor 1 offen und schaltet das Ausgangssignal des Oszillators zu den Toren 2 und 3 durch. Diese übertragen die Impulse des Oszillators abwechslungsweise auf die Basen der Transistoren S5 und S6, so daß jeder dieser Transistoren ein Ansteuerungssignal mit der halben Oszillatorfrequenz, d. h. beispielsweise 40 kHz, erhält. Die Transistoren S5 und S6 arbeiten auf die Primärwicklungen der Transformatoren T1 und T2. Der Hilfskreis bewirkt daher, daß die Last L über die Vorschaltdrossel T3 eine Wechselspannung mit einer Frequenz von etwa 40 kHz und einer Spitzenspannung von etwa 300 V erhält. Während des Abschaltens des stromführenden Transistorpaares (z. B. S2, S3) wird der Laststrom für kurze Zeit vom Kommutierungskondensator C1 übernommen, um nach erfolgter Kommutierung von den Freilaufdioden D1 und D4 geführt zu werden, so daß der Laststrom, der infolge des induktiven Anteils der Last weiterfließt, jetzt durch D1, C3, D4 geleitet wird. Nach erfolgter Kommutation, aber vor dem Nulldurchgang des Laststromes wird das andere Transistorpaar, S1 und S4 eingeschaltet.

Untersuchen wir nun, was beim Einschalten der Schaltung nach Fig. 1 geschieht.

Nach Einschalten der Netzspannung entsteht am Gleichrichter G die Zwischenkreisspannung von etwa 300 V, aber die Brücke arbeitet nicht, da keine Speisespannung des Hilfskreises vorhanden ist. Allerdings lädt sich der Glättungskondensator C2 über den Widerstand R2. Die Zeitkonstante R2 C2 ist so gewählt, daß sich C2 praktisch linear in etwa 10 Sekunden auf 15 V auflädt. In diesem Augenblick öffnet der Schwellwertschalter A2 das Tor 1 und gibt damit die Ansteuerung der Transistoren S5 und S6 und damit über T1 und T2 auch der Brückentransistoren S1—S4 frei. Ist keine Last L vorhanden, so fließt trotz nun arbeitender Brücke kein Strom durch T3 und an dessen Sekundärwicklung entsteht auch keine Spannung. Der Kondensator C2 entlädt sich sehr schnell über T1, S5 und T2, S6, der Schwellwertschalter A2 kippt zurück und unterbricht die Ansteuerung von S5 und S6. Die Spannung an C2 steigt nun wieder an und das Ganze wiederholt sich, so daß an C2 eine Sägezahnspannung mit einem Spitzenwert von 15 V entsteht. Ohne Last L bleibt die Brücke daher nur sehr kurze Zeit in Betrieb. Das Verhältnis von Betriebs- zu Unterbruchszeit ist sehr klein, so daß im Mittel auch die beim Betrieb ohne Last L durch den Kommutierungskondensator C1 in den Transistoren S1—S4 verursachten Verluste dementsprechend klein bleiben. Bei auch ohne Last L arbeitender Brücke müßte der Kommutierungskondensator C1 sehr viel kleiner gemacht werden, um die Verluste beim Leerlaufbetrieb in Grenzen zu halten. Diese Verkleinerung bewirkt allerdings beim Betrieb mit Last L höhere Umschaltverluste in den Transistoren S1—S4. Das vorgestellte Prinzip vermeidet diese Nachteile und führt zu kleinen Verlusten im Leerlauf und im Betrieb.

Durch Aufbringen einer Sekundärwicklung auf die Vorschaltdrossel T3 und Verwendung der so gewonnenen, gleichgerichteten Spannung als Spannung von 15 V für den Hilfskreis vermeidet man den sonst notwendigen Einbau einer Zusatzschaltung zum Ein- und Auschalten der Brücke im Leerlauf sowie einen separaten Netztransformator zu Erzeugung der Spannung von 15 V, was nebst der Kostenreduktion die Vorrichtung kleiner und leichter macht. Die Erfahrung zeigt zudem, daß auch bei starken Schwankungen der Last L, hervorgerufen beispielsweise durch die stark unterschiedlichen Charakteristiken einer Quecksilberdampfhochdrucklampe im warmen und im kalten Zustand, die gleichgerichtete Sekundärspannung des Transformators T3 praktisch konstant bleibt.

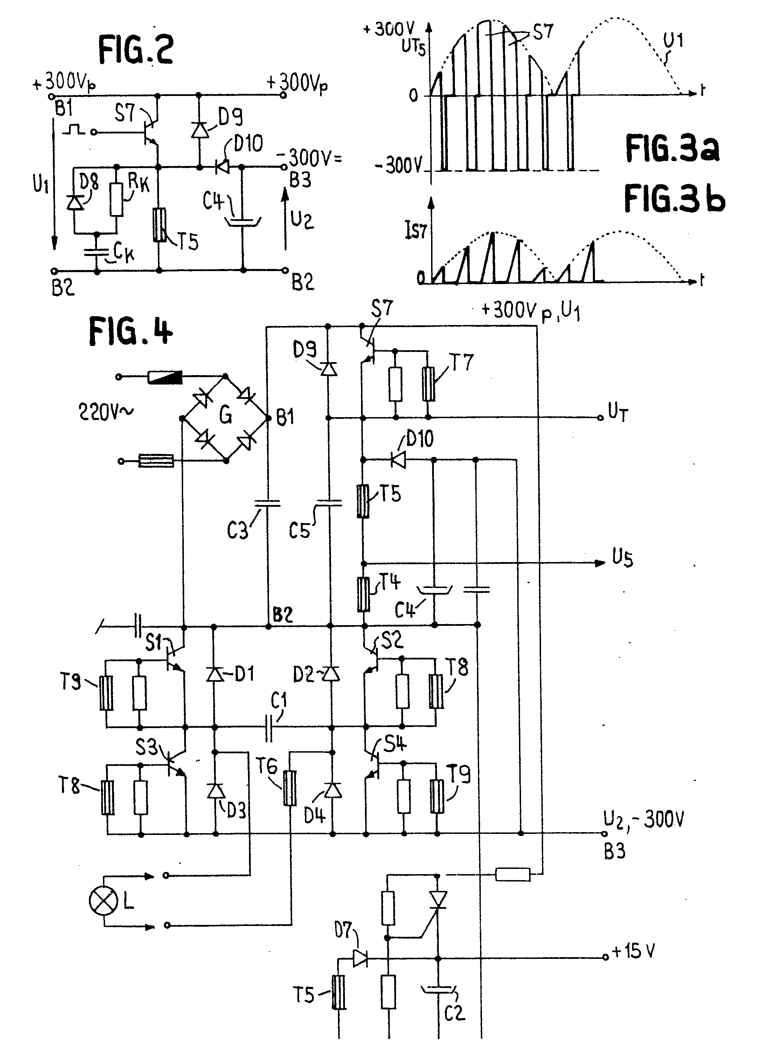

Die Schaltung gemäß Fig. 1 hat neben den oben genannten Vorteilen allerdings den Nachteil, daß der vom Netz aufgenommene Strom statt sinusförmig stark verzerrt ist, was, wie obenerwähnt, bei Anlagen mit größeren Anschlußleistungen von den Elektrizitätslieferanten nicht bewilligt wird und den Einsatz aufwendiger Filtermittel erfordern würde. Um einen uneingeschränkten Einsatz der erfindungsgemäßen Vorrichtung zu ermöglichen, ist eine Erzielung eines mindestens annähernd sinusförmigen Stromes von großer Bedeutung. Ein geeignetes Verfahren besteht darin, dem Gleichrichter G in Fig. 1 einen Sperrwandler gemäß Fig. 2 nachzuschalten. Der Glättungskondensator C3 in Fig. 1 wird stark verkleinert, so daß praktisch keine Glättung, sondern nur noch eine Filterung für höhere Frequenzen stattfindet. Wie in Fig. 3a ersichtlich, ist die Eingangsspannung $U_1$ an den Eingängen B1 und B2 des Sperrwandlers eine zweiweggleichgerichtete, nicht geglättete Gleichspannung mit sinusförmigem Verlauf.

Der Sperrwandler enthält einen Schalter, zum Beispiel einen Transistor, der durch eine in Fig. 2 nicht gezeichnete Steuerschaltung an der Basis Impulse konstanter Dauer erhält. Der Kollektor des Transistors S7 ist mit dem Anschluß B1 und der Emitter über eine Speicherdrossel T5 mit dem Anschluß B2 verbunden. Der Transistor S7 ist geschützt mit einer Schutzdiode D9, die zwischen Kollektor und Emitter geschaltet ist und einem Kommutationsnetzwerk, bestehend aus dem Kommutationskondensator $C_K$, dem Widerstand $R_K$ und der Diode D8, das parallel zu T5 geschaltet ist. Im weiteren enthält die Schaltung einen Glättungskondensator C4 von relativ großer Kapazität und eine Gleichrichterdiode D10.

Die Funktion des Sperrwandlers gemäß Fig. 3 ist folgende:

Durch einen Impuls auf die Basis des Transistors S7 wird dieser für die Dauer des Impulses leitend und schaltet die Spannung am Eingang B1, die je nach momentaner Phasenlage der Netzspannung zwischen 0 und etwa +300 V variiert, auf die Speicherdrossel T5, deren Strom, wie in Fig. 3b gezeigt, linear ansteigt. Der Kondensator $C_K$ lädt sich über $R_K$ bis auf den Wert der Eingangsspannung U1. Am Ende des Steuerimpulses beginnt der Transistor S7 zu sperren, der Strom durch T5 wird über die Diode D8 vom Kommutationskondensator $C_K$ übernommen. Die Spannung am Emitter von S7 wird sehr rasch negativ, und sobald sie negativer ist als die Spannung am Anschluß B3, beginnt die Diode D10 zu leiten, wodurch der durch die Speicherdrossel fließende Strom den Kondensator C4 auflädt. Infolge der Übernahme des im Ausschaltzeitpunkt durch den Transistor S7 fließenden Stromes durch den Kommutationskondensator $C_K$ fällt der Strom durch S7 auf 0, bevor die Kollektor-Emitterspannung von S7 große Werte erreicht. Dadurch wird der Transistor S7 geschützt und die Abschaltverlustenergie stark reduziert. Wie in Fig. 3b ersichtlich, ist der Strom durch S7 eine Folge von Sägezahnförmigen Impulsen. Nach einer (nicht gezeichneten) Filterung zur Elimination der hochfrequenten Anteile wird der vom Netz aufgenommene Strom praktisch sinusförmig.

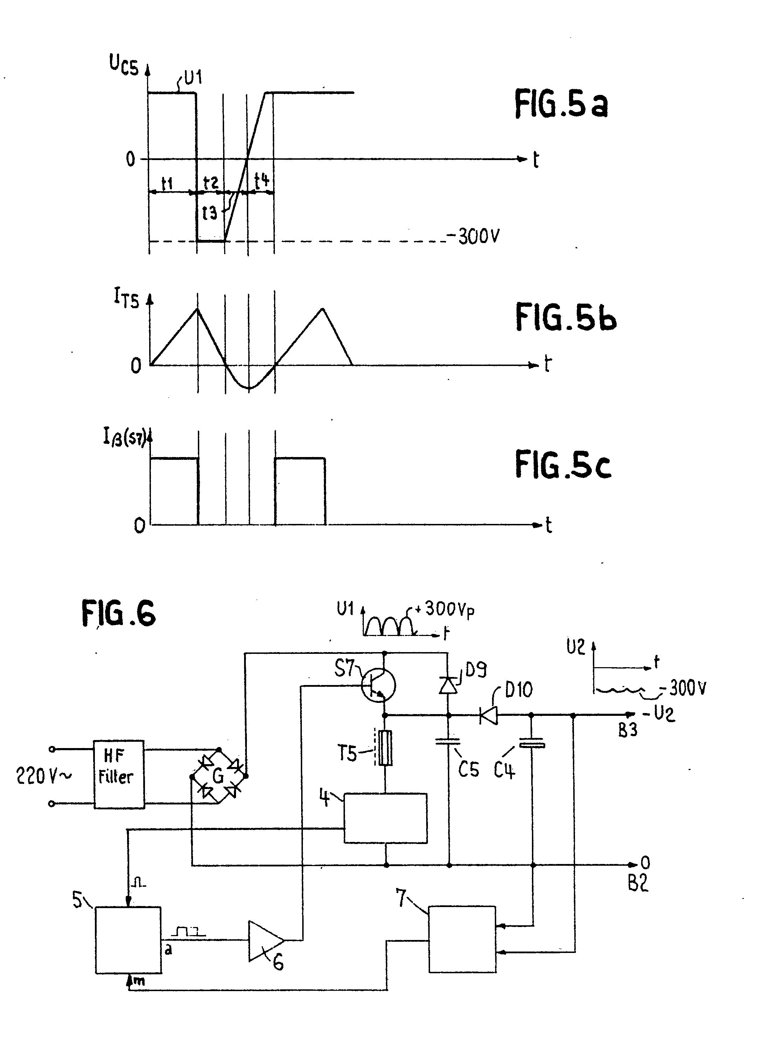

Die Schaltung gemäß Fig. 2 hat allerdings den Nachteil, daß jedesmal nach dem Einschalten des Transistors S7 der Kommutierungskondensator $C_K$ über den Widerstand $R_K$ wieder auf den Wert von U1 geladen werden muß, was bei Frequenzen von einigen zehn kHz zu beträchtlichen Verlusten in $R_K$ führt und damit den Gesamtwirkungsgrad erheblich verschlechtert. Das Schema in Fig. 4 zeigt eine verbesserte Version des Sperrwandlers, die die Verluste in $R_K$ eliminiert. Man erkennt den bekannten Gleichrichter G, die Brücke mit den Transistoren S1 – S4, deren Funktion bekannt ist und nicht mehr besprochen wird. Die Brücke und damit indirekt auch die Last L werden gespiesen durch die negative Spannung U2 an C4. Der Sperrwandler wurde ergänzt durch eine Sättigungsdrossel T4 in Serie zur Speicherdrossel T5, die auch eine Sekundärwicklung enthält. Das Kommutierungsnetzwerk $C_K$, $R_K$ und D8 aus Fig. 2 wurden ersetzt durch den Kommutierungskondensator C5, der parallel zu den Drosseln T4 und T5 geschaltet ist und mit diesen einen Resonanzkreis bildet. Die anderen Elemente, wie S7, D9, D10 und C4 sind gleich wie in Fig. 2. Der Transistor S7 wird durch die Sekundärwicklung des Transformators T7, der zum hier nicht gezeichneten Steuerkreis des Sperrwandlers gehört, angesteuert. Die Funktion des Sperrwandlers in Fig. 4 wird erklärt anhand des Diagramms Fig. 5.

Während der Zeit t1 leitet S7, die Ausgangsspannung U1 des Gleichrichters G wird auf T5 geschaltet und der Strom in dieser Speicherdrossel steigt linear an, wie in Fig. 5b dargestellt. Am Ende von t1 wird der Basisstrom von S7 null und der Transistor sperrt. Der weiterhin fließende Strom in T5 wird vom Kommutierungskondensator C5 übernommen, wobei die Spannung am Emitter von S7 rasch vom positiven Wert von U1 auf den negativen Wert von U2 (−300 V) sinkt. Da die Spannung U2 konstant ist, nimmt der Strom $I_{T5}$ während der Zeit t2 linear ab. Am Ende der Zeit $t_2$ wird der Strom $I_{T5}$ null, und der Kondensator C5 ist, ebenso wie C4, auf die Spannung U2 aufgeladen. Der Kondensator C5 beginnt sich nun durch T4 und T5 zu entladen, was während der durch die Resonanzfrequenz des Schwingkreises bestimmten Zeit t3 zu einem umgekehrten Strom durch T4 und T5 führt. Am Ende von t3 ist der Kondensator C5 vollständig entladen und der umgekehrte Strom durch T4 und T5 maximal. Dieser Strom fließt weiter und lädt nun C5 während der Zeit t4 positiv auf, wobei t4 ebenfalls von der Resonanzfrequenz des Schwingkreises abhängt. Wenn die positive Spannung an C5 den Wert U1 erreicht hat, beginnt die Diode D9 zu leiten und hält die Spannung an C5 auf diesem Wert. Am Ende von t4 geht der Strom durch T4 und T5 durch null. Dieser Nulldurchgang wird von einem Nulldurchgangsdetektor, der nicht gezeichnet ist, aber von dem die Sättigungsdrossel T4 ein Teil ist, festgestellt und damit der nächste Impuls auf die Basis von S7 ausgelöst, womit der nächste Zyklus beginnt. Die Impulsdauer und die Repetitionsfrequenz bleiben annähernd konstant. In Fig. 5a ist ersichtlich, daß am Ende der Zeit t4, wenn der Transistor S7 wieder einschaltet, die Spannung an C5 gleich U1 ist, so daß der Kondensator C5 beim Einschalten von S7 nicht geladen werden muß und somit jeder Verlust entfällt. So ergibt die Schaltung gemäß Fig. 4 eine sinusförmige Stromaufnahme aus den Netz und sehr geringe Umschaltverluste. Die Schaltung nach Fig. 4 hat folgende Vorteile:

- Der Kommutierungskondensator C5 kann relativ groß gewählt werden, was die Kommutierungsverluste in S7 gering hält.
- Es entstehen keine Umladeverluste in einem Ladewiderstand für C5.
- Der dem Netz entnommene Strom ist annähernd sinusförmig.

Im weiteren ist in Fig. 4 ersichtlich, daß die Spannungsversorgung der Hilfskreise über eine Sekundärwicklung der Speicherdrossel T5 erfolgen kann. Eine andere Möglichkeit besteht darin, diese Spannung aus einer Sekundärwicklung von T6 zu beziehen (nicht gezeichnet), womit das Prinzip von Fig. 1 auch hier angewendet würde.

Fig. 6 zeigt das Blockschema der Steuerschaltung für den Transistor S7 in Fig. 4. Der Nulldurchgangsdetektor 4 des Stromes in T5 löst bei jedem positiven Nulldurchgang durch den Verstärker 6 einen Impuls an die Basis des Transistors S7 aus.

Die Breite dieses Impulses wird durch den Pulsbreitenmodulator 5 bestimmt, dessen Modulationseingang mit dem Ausgang des Spannungsreglers 7 verbunden ist, der die Spannung U2 an den Anschlüssen des Kondensators C4 konstant hält. Für eine konstante Last und Eingangsspannung bleibt, wie bereits erwähnt, die Impulsdauer konstant.

Die oben beschriebene Erfindung ist nicht auf eine Vorrichtung zum Betrieb von Quecksilberdampfhochdrucklampen beschränkt, sie kann vielmehr für jede induktive oder ohmisch-induktive Last verwendet werden. Die Schaltung zur Erzielung eines sinusförmigen Netzstromes kann für jede Anwendung mit einem Gleichstromzwischenkreis eingesetzt werden. Es ergeben sich verschiedene Vorteile in bezug auf neue Möglichkeiten, besseren Wirkungsgrad, geringere Kosten.

**Patentansprüche**

1. Wechselstrom-Wechselstromumformer mit Gleichstromzwischenkreis, zur Speisung einer ohmisch-induktiven oder induktiven Last (L), mit einem Gleichrichter (G), einem Gleichstrom-Stellglied, einem Filterkondensator (C4), welcher die Last (L) über einen Wechselrichter (S1–S4) speist, und mit einen Oszillator aufweisenden Hilfskreisen zur Steuerung der Schaltmittel des Wechselrichters, um die Last mit Hilfe der vom Wechselrichter gelieferten Spannung zu speisen, dadurch gekennzeichnet, daß ein Glättungskondensator (C2) vorgesehen ist, welcher einerseits in Abhängigkeit vom Laststrom und andererseits mit geringerer Ladegeschwindigkeit vom Gleichrichter her aufladbar ist, um eine im wesentlichen konstante, im Leerlauf jedoch intermittierende Versorgungsspannung der Hilfskreise (A1, A2, FF1, S5, S6) für die Wechselrichtersteuerung zu erzeugen, und daß das Gleichstrom-Stellglied einen Sperrwandler (S7, T5, Ck, Rk, D8; S7, T5, T4, C5) aufweist, der an den Ausgang des eine zweiweggleichgerichtete Gleichspannung liefernden Gleichrichters (G) geschaltet ist und durch ein Signal aus einer Steuerschaltung (5, 6, 7) periodisch mit einer gegenüber der Speisefrequenz des Umformers hohen Frequenz und mit konstanter Impulsbreite eingeschaltet wird, um den vom Gleichrichter (G) an den Filterkondensator (C4) gelieferten Ladestrom so zu steuern, daß der dem Netz entnommene Strom mindestens annähernd sinusförmig gehalten wird.

2. Umformer nach Anspruch 1, dadurch gekennzeichnet, daß der Sperrwandler ein in Serie mit einer Drosselspule (T5) geschaltetes Schaltelement (S7) aufweist, welches in der Drosselspule sägezahnförmige Stromimpulse erzeugt, daß ein in Serie mit einem durch eine erste Diode (D8) überbrückten Widerstand (Rk) geschalteter Kommutationskondensator (Ck) der Drosselspule parallelgeschaltet ist, und daß die in der Drosselspule gespeicherte Energie durch eine zweite Diode (D10) den Filterkondensator (C4) mit einer Gleichspannung auflädt, wobei die hochfrequenten Komponenten des Sperrwandler-Eingangsstromes durch einen Glättungskondensator (C3) ausgesiebt werden (Fig. 1 und 2).

3. Umformer nach Anspruch 1, dadurch gekennzeichnet, daß der Sperrwandler ein in Serie mit einer Drosselspule (T5, T4) geschaltetes Schaltelement (S7) aufweist, welches in der Drosselspule sägezahnförmige Stromimpulse erzeugt, daß ein Kommutationskondensator (C5) der Drosselspule parallelgeschaltet ist, und daß die in der Drosselspule gespeicherte Energie durch eine zweite Diode (D10) den Filterkondensator (C4) mit einer Gleichspannung auflädt, wobei die hochfrequenten Komponenten des Sperrwandler-Eingangsstromes durch einen Glättungskondensator (C3) ausgesiebt werden (Fig. 3).

4. Umformer nach Anspruch 3, dadurch gekennzeichnet, daß die Drosselspule (T5, T4) und der Kommutationskondensator (C5) einen Parallel-Resonanzkreis in der Weise bilden, daß beim Ausschalten des Schaltelementes (S7) der Strom in der Drosselspule den Kommutationskondensator umlädt, wodurch die Spannung am Kondensator negativ wird und der Strom anschließend unter linearer Abnahme durch die Diode (D10) den Filterkondensator (C4) auflädt, wobei in einer weiteren Phase der Kondensator (C5) sich durch die Drosselspule durch einen in umgekehrter Richtung fließenden sinusförmigen Strom umlädt, welcher eine positiv-steigende Spannung am Kondensator (C5) hervorruft bis diese Spannung den Spitzenwert der zweiweggleichgerichteten Spannung erreicht, und daß ein Nulldurchgangsdetektor (4) vorgesehen ist, der den Nulldurchgang vom negativen zum positiven Wert des Stromes in der Drosselspule erfaßt und das Wiedereinschalten des Sperrwandlers bewirkt, so daß die Ladung des Kommutationskondensators (C5) beim Wiedereinschalten keine Änderung erfährt.

5. Umformer nach Anspruch 4, dadurch gekennzeichnet, daß die Steuerschaltung einen Pulsbreitenmodulator (5) enthält, dessen Impulse durch den Nulldurchgangsdetektor (4) ausgelöst werden und die nach Verstärkung in einem Verstärker (6) das Schaltelement (S7) des Sperrwandlers steuern und deren Länge durch einen Spannungsregler (7) in Funktion der Spannung an der Last (L) geregelt wird.

6. Umformer nach Anspruch 4, dadurch gekennzeichnet, daß der Nulldurchgangsdetektor (4) eine Sättigungsdrossel (T4) in Serie mit der Speicherdrossel (T5) aufweist.

7. Umformer nach Anspruch 1, dadurch gekennzeichnet, daß sie einen Wechselrichter (S1–S4) aufweist, welcher durch Hilfskreise (A1, A2, FF1, 1, 2, 3, S5, S6, T1, T2) gesteuert wird, um die Last (L) mit Hilfe der am Filterkondensator (C4) vorhandenen Gleichspannung zu speisen, wobei die Hilfskreise einen Oszillator (A1), welcher Schaltmittel (FF1, S5, S6) steuert, aufweisen, welche die am Filterkondensator vorhandene Gleichspannung mit der Frequenz des Oszillators zerhacken.

8. Umformer nach Anspruch 7, dadurch gekennzeichnet, daß die Schaltmittel einen durch das Ausgangssignal des Oszillators (A1) gesteuerten Flip-Flop (FF1) aufweisen, das abwechslungsweise ein Steuersignal an zwei UND-Tore (2, 3) abgibt, welche je durch einen Schalttransistor (S5, S6) mit zwei Transformatoren (T1, T2), deren Sekundärwicklungen den Wechselrichter (S1 – S4) steuern, verbunden ist, wobei die zwei UND-Tore das Ausgangssignal des Oszillators durch ein weiteres UND-Tor (1) erhalten, welches durch einen Schwellenschalter (A2) in Funktion einer Versorgungsspannung der Hilfskreise gesteuert wird.

9. Umformer nach Anspruch 1, dadurch gekennzeichnet, daß die Versorgungsspannung für die Hilfskreise durch den Strom in der Last (L) transformatorisch erzeugt ist.

10. Umformer nach Anspruch 1 oder 9, dadurch gekennzeichnet, daß die Mittel zur laststromabhängigen Aufladung des die Versorgungsspannung der Hilfskreise liefernden Glättungskondensators (C2) einen Transformator (T3) aufweisen, dessen Primärwicklung in Serie zur Last (L) geschaltet ist und als Drossel dient und dessen Sekundärwicklung die Versorgungsspannung am Glättungskondensator (C2) nach Gleichrichtung durch eine Diode (D7) erzeugt, wobei der Sekundärkreis des Transformators mit dem Gleichrichter (G) so verbunden ist, daß im Leerlauf der Glättungskondensator (C2) durch die Ausgangsspannung des Gleichrichters (G) mit einer Zeitkonstante geladen wird, die größer ist als die Entladezeit des Glättungskondensators durch die von den Hilfskreisen herrührende Belastung.

11. Umformer nach Anspruch 1 oder 9, dadurch gekennzeichnet, daß die Mittel zur laststromabhängigen Aufladung des die Versorgungsspannung der Hilfskreise liefernden Glättungskondensators (C2) einen Transformator (T5) aufweisen, dessen Primärwicklung als Drosselspule für den Sperrwandler dient und dessen Sekundärwicklung die Versorgungsspannung am Glättungskondensator (C2) nach Gleichrichtung durch eine Diode (D7) erzeugt, wobei der Sekundärkreis des Transformators mit dem Gleichrichter (G) so verbunden ist, daß im Leerlauf der Glättungskondensator (C2) durch die Ausgangsspannung des Gleichrichters (G) mit einer Zeitkonstante geladen wird, die größer ist als die Entladezeit des Glättungskondensators durch die von den Hilfskreisen herrührende Belastung (Fig. 4).

**Claims**

1. AC/AC-converter with DC-intermediate circuit for feeding an ohmic-inductive or inductive load (L), with a rectifier (G), a DC-regulating circuit, a filter capacitor (C4) which feeds the load (L) through a DC/AC-converter (S1 – S4), and with auxiliary circuits comprising an oscillator for controlling the switching means of the DC/AC-converter in order to feed the load with the voltage delivered by the DC/AC-converter, characterized in that it comprises a smoothing capacitor (C2) capable to be charged on the one hand as a function of the current in the load and on the other hand at slow rate by the rectifier for producing a substantially constant, under no load however intermittent supply voltage for the auxiliary circuits which control the DC/AC-converter, and in that the DC-regulating circuit comprises a blocking converter (S7, T5, Ck, Rk, D8; S7, T5, T4, C5) which is connected to the output of the rectifier (G) delivering a full-wave rectified voltage, said blocking converter being periodically switched on by a signal of a control circuit (5, 6, 7) having a frequency higher than the frequency which feeds the converter and a constant pulse width, for controlling the current delivered by the rectifier (G) for loading the filter capacitor (C4), so that the current drawn from the mains is maintained at least substantially sinusoidal.

2. Converter according to claim 1, characterized in that the blocking converter comprises a choke coil (T5) connected in series with a switching element (S7) which produces sawtooth pulses of current in the choke coil, in that a switching capacitor (Ck) in series with a first diode (D8) connected in parallel with a resistor (Rk) is branched in parallel with the choke coil and in that the energy stored within the choke coil charges the filter capacitor (C4) with a DC-voltage through a second diode (D10), the high frequency components of the input current of the blocking converter being filtered by a smoothing capacitor (C3).

3. Converter according to claim 1, characterized in that the blocking converter comprises a choke coil (T4, T5) connected in series with a switching element (S7) which produces sawtooth pulses of current in the choke coil, in that a switching capacitor (C5) is connected in parallel with the choke coil and in that the energy stored within the choke coil charges the filter capacitor (C4) with a DC-voltage through a second diode (D10), the high frequency components of the input current of the blocking converter being filtered by a smoothing capacitor (C3).

4. Converter according to claim 3, characterized in that the choke coil (T4, T5) and the switching capacitor (C5) form a parallel resonant circuit such that when the switching element (S7) is switched off, the current in the choke coil reverses the polarity of the charge of the switching capacitor, the voltage across this capacitor thus becoming negative and the current which then decreases linearly charges the filter capacitor (C4) through the second diode (D10) while in a further step, the switching capacitor (C5) reverses its charge by delivering in the choke coil a sinusoidal current flowing in the reverse direction which produces across the switching capacitor (C5) a positiv going voltage which increases until it reaches the peak value of the full-wave rectified voltage, and in that a zero-passage detector (4) is provided which detects the passage through zero from the negativ to the positiv direction of flow of the current in the choke coil and produces the switching on of the blocking converter, so that the charge of the switching capacitor (C5) is not submitted to any change at the time of the switching on of the blocking converter.

5. Converter according to claim 4, characterized in that the control circuit comprises a pulse width modulator (5) the pulses of which being initiated by the zero-passage detector (4) and controlling the switching element (S7) of the blocking converter after amplification in an amplifier (6), the width of said pulses being regulated by a voltage regulator (7) as a function of the voltage across the load (L).

6. Converter according to claim 4, characterized in that the zero-passage detector (4) comprises a saturation choke (T4) in series with the choke coil (T5).

7. Converter according to claim 1, characterized in that it comprises a DC/AC-converter (S1—S4) controlled by auxiliary circuits (A1, A2, FF1, 1, 2, 3, S5, S6, T1, T2) for feeding the load (L) by the DC-voltage on the filter capacitor (C4), the auxiliary circuits comprising an oscillator (A1) controlling the switching means (FF1, S5, S6) which chop the DC-voltage on the filter capacitor (C4) with the oscillator's frequency.

8. Converter according to claim 7, characterized in that the switching means comprise a flip-flop (FF1) controlled by the output signal of the oscillator (A1), the flip-flop delivering alternately a control signal to two AND gates (2, 3) each of these gates being connected by a switching transistor (S5, S6) to a transformer (T1, T2), the secondary windings of these transformers controlling the DC/AC-converter (S1—S4) and the two AND gates receiving the output signal of the oscillator through another AND gate (1) controlled by a level detector (A2) as a function of a supply voltage of the auxiliary circuits.

9. Converter according to claim 1, characterized in that the supply voltage for the auxiliary circuits is produced by transformer means as a function of the current in the load (L).

10. Converter according to claim 1 or 9, characterized in that the means for loading as a function of the current in the load the smoothing capacitor (C2) which delivers the feeding voltage for the auxiliary circuits comprise a transformer (T3) the primary winding of which being connected in series with the load (L) and serving of a choke coil and the secondary winding of which producing, after rectification by a diode (D7), the feeding voltage on the smoothing capacitor (C2), the secondary circuit of the transformer being connected to the rectifier (G) such that in case of no load, the smoothing capacitor (C2) is charged by the output voltage of the rectifier (G) with a time constant which is greater than the discharging time of the smoothing capacitor by the charge represented by the auxiliary circuits.

11. Converter according to claim 1 or 9, characterized in that the means for loading as a function of the current in the load the smoothing capacitor (C2) which delivers the feeding voltage for the auxiliary circuits comprise a transformer (T5) the primary winding of which serving of a choke coil for the blocking converter and the secondary winding of which producing, after rectification by a diode (D7), the feeding voltage on the smoothing capacitor (C2), the secondary circuit of the transformer being connected to the rectifier (G) such that in case of no load, the smoothing capacitor (C2) is charged by the output voltage of the rectifier (G) with a time constant which is greater than the discharging time of the smoothing capacitor by the charge represented by the auxilairy circuits.

## Revendications

1. Convertisseur alternatif-alternatif avec circuit intermédiaire à courant continu pour l'alimentation en énergie d'une charge ohmique-inductive ou inductive (L), avec un redresseur (G), un circuit de réglage à courant continu, un condensateur de filtrage (C4) alimentant la charge (L) à travers un convertisseur continu-alternatif (S1—S4) et avec des circuits auxiliaires comprenant un oscillateur pour la commande des moyens de commutation du convertisseur continu-alternatif, pour alimenter la charge avec la tension délivrée par le convertisseur continu-alternatif, caractérisé en ce qu'il comprend un condensateur d'égalisation (C2) susceptible d'être chargé d'une part en fonction du courant dans la charge et d'autre part à vitesse lente par le redresseur pour produire une tension d'alimentation substantiellement constante, à vide toutefois intermittente, des circuits auxiliaires (A1, A2, FF1, S5, S6) pour la commande du convertisseur continu-alternatif, et en ce que le circuit de réglage à courant continu comprend un convertisseur de blocage (S7, T5, Ck, Rk, D8; S7, T5, T4, C5) qui est connecté à la sortie du redresseur (G) délivrant une tension redressée biphasée et qui est enclenché périodiquement par un signal d'un circuit de commande (5, 6, 7) avec une fréquence plus élevée que la fréquence d'alimentation du convertisseur et avec une largeur d'impulsion constante, pour contrôler le courant de charge délivré par le redresseur (G) au condensateur de filtrage (C4) de manière que le courant tiré du réseau est maintenu au moins approximativement sinusoidal.

2. Convertisseur selon la revendication 1, caractérisé en ce que le convertisseur de blocage comprend une bobine de réactance (T5) connectée en série avec un élément de commutation (S7) qui produit dans la bobine de réactance de impulsions de courant en dent-de-scie, en ce qu'un condensateur de commutation (Ck) en série avec une première diode (D8) connectée en parallèle sur une résistance (Rk) est branché en parallèle sur la bobine de réactance et en ce que l'énergie emmagasinée dans la bobine de réactance charge le condensateur de filtrage (C4) avec une tension continue à travers une deuxième diode (D10), les composantes de haute fréquence du courant d'entrée du convertisseur de blocage étant filtrées par un condensateur d'égalisation (C3).

3. Convertisseur selon la revendication 1, caractérisé en ce que le convertisseur de blocage comprend une bobine de réactance (T4, T5) connectée en série avec un élément de commutation (S7) qui produit dans la bobine de réactance des impulsions de courant en dent-descie, en ce qu'un condensateur de commutation (C5) est branché en parallèle sur la bobine de réactance et en ce que l'énergie emmagasinée dans la bobine de réactance charge le condensateur de filtrage (C4) avec une tension continue à travers une deuxième diode (D10), les composantes de haute fréquence du courant d'entrée du convertisseur de blocage étant filtrées par un condensateur d'égalisation (C3).

4. Convertisseur selon la revendication 3, caractérisé en ce que la bobine de réactance (T4, T5) et le condensateur de commutation (C5) forment un circuit résonant parallèle de manière que dans la phase de blocage de l'élément de commutation (S7), le courant dans la bobine de réactance inverse la charge du condensateur de commutation, de sorte que la tension aux bornes de ce condensateur devient négative et que le courant diminuant ensuite linéairement charge le condensateur de filtrage (C4) à travers la deuxième diode (D10), tandis que dans une phase ultérieure, le condensateur de commutation (C5) inverse sa charge en délivrant dans la bobine de réactance un courant de sens inverse sinusoidal, ce qui produit aux bornes du condensateur de commutation (C5) une tension positive qui croît jusqu'à ce qu'elle atteigne la valeur de pointe de la tension redressée biphasée, et en ce qu'il est prévu un détecteur de passage par zéro qui détecte le passage par zéro de la valeur négative à la valeur positive du courant dans la bobine de réactance et produit le réenclenchement du convertisseur de blocage, de sorte que la charge du condensateur de commutation (C5) ne subit aucune variation lors dudit réenclenchement.

5. Convertisseur selon la revendication 4, caractérisé en ce que le circuit de commande comprend un modulateur de largeur d'impulsions (5) dont les impulsions sont amorcées par le detecteur de passage a zero (4) et controlent l'element de commutation (S7) du convertisseur de blocage apres amplification dans un amplificateur (6), la largeur desdites impulsions etant reglee par un regulateur de tension (7) en fonction de la tension aux bornes de la charge (L).

6. Convertisseur selon la revendication 4, caractérisé en ce que le détecteur de passage par zéro (4) comprend une bobine de saturation (T4) en série avec la bobine de réactance (T5).

7. Convertisseur selon la revendication 1, caractérisé en ce qu'il comprend un convertisseur continu-alternatif (S1—S4) commandé par des circuits auxiliaires (A1, A2, FF1, 1, 2, 3, S5, S6, T1, T2) pour alimenter la charge (L) par la tension continue présente sur le condensateur de filtrage (C4), les circuits auxiliaires comprenant un oscillateur (A1) commandant les moyens de commutation (FF1, S5, S6) qui hachent la tension continue sur le condensateur de filtrage avec la fréquence de l'oscillateur.

8. Convertisseur selon la revendication 7, caractérisé en ce que les moyens de commutation comprennent un flip-flop (FF1) commandé par le signal de sortie de l'oscillateur (A1), le flip-flop délivrant alternativement un signal de commande à deux portes ET (2, 3), chacune de celles-ci étant reliée par un transistor de commutation (S5, S6) avec un transformateur (T1, T2), les enroulements secondaires desdits transformateurs commandant le convertisseur continu-alternatif (S1—S4) et les deux portes ET recevant le signal de sortie de l'oscillateur à travers une autre porte ET (1) commandée par un commutateur de seuil (A2) en fonction d'une tension d'alimentation des circuits auxiliaires.

9. Convertisseur selon la revendication 1, caractérisé en ce que la tension d'alimentation pour les circuits auxiliaires est produite par des moyens de transformation en fonction de courant dans la charge (L).

10. Convertisseur selon la revendication 1 ou 9, caractérisé en ce que les moyens pour charger, en fonction du courant dans la charge, le condensateur d'égalisation (C2) délivrant la tension d'alimentation des circuits auxiliaires, comprennent un transformateur (T3) dont l'enroulement primaire est connecté en série avec la charge (L) et sert de bobine de choc et dont l'enroulement secondaire produit, après redressement par une diode (D7), la tension d'alimentation sur le condensateur d'égalisation (C2), le circuit secondaire du transformateur étant relié au redresseur (G) de manière qu'à vide, le condensateur d'égalisation (C2) se charge par la tension de sortie du redresseur (G) avec une constante de temps plus grande que le temps de décharge du condensateur d'égalisation par la charge représentée par les circuits auxiliaires.

11. Convertisseur selon la revendication 1 ou 9, caractérisé en ce que les moyens pour charger, en fonction du courant dans la charge, le condensateur d'égalisation (C2) délivrant la tension d'alimentation des circuits auxiliaires, comprennent un transformateur (T5) dont l'enroulement primaire sert de bobine de choc pour le convertisseur de blocage et dont l'enroulement secondaire produit, après redressement par une diode (D7), la tension d'alimentation sur le condensateur d'égalisation (C2), le circuit secondaire du transformateur étant relié au redresseur (G) de manière qu'à vide, le condensateur d'égalisation (C2) se charge par la tension de sortie du redresseur (G) avec une constante de temps plus grande que le temps de décharge du condensateur d'égalisation par la charge représentée par les circuits auxiliaires.

# FIG.1

+300V=

FIG.2

FIG.3a

FIG.3b

FIG.4

0 013 866

**FIG.5a**

$U_{C5}$

U1

0

t1 t2 t3 t4

−300V

t

**FIG.5b**

$I_{T5}$

0

t

**FIG.5c**

$I_{\beta(S7)}$

0

t

**FIG.6**

U1 +300Vp

t

U2

t

−300V

S7

D9

D10

−U2

B3

HF Filter

220V~

G

T5

C5

C4

4

D10

5

a

6

7

0

B2

m